# EUROPEAN PATENT APPLICATION

(11) **EP 3 711 935 A1**
(43) Date of publication of application: **23.09.2020**
(21) Application number: 19164325.3
(22) Date of filing: 21.03.2019
(51) Int. Cl.: B29C 70/52, B29C 70/54, B29C 59/10, B29C 59/02, B29L 31/08

(54) **METHOD AND SYSTEM FOR MANUFACTURING A SUB-COMPONENT FOR A ROTOR BLADE OF A WIND TURBINE**

(71) Applicant: Siemens Gamesa Renewable Energy A/S, 7330 Brande (DK)
(72) Inventor: Girolamo, Donato, 82020 Molinara (BN) (IT); Kristensen, Jens Jørgen Østergaard, 9400 Nørresundby (DK); Noerlem, Michael, 9230 Svenstrup (DK)
(74) Representative: Aspacher, Karl-Georg

(57) **Abstract**

The invention relates to a Method for manufacturing a sub-component (1) for a rotor blade (2) of a wind turbine, comprising the following steps:
- pultruding fiber material (3) by pultrusion means (4),
- mechanically treating the surface (5) of at least one face (10, 11) of the pultruded fiber material (6) by mechanical and/or physical treatment means (7),
- cutting the pultruded fiber material (6) to fiber material elements (8) of desired lengths by cutting means (9), and
- stacking a plurality of the fiber material elements (8) to form the sub-component (1).

The invention further relates to a system (18) for manufacturing a sub-component (1) for a rotor blade (2) of a wind turbine.

## Description

The present invention is related to a method for manufacturing a sub-component for a rotor blade of a rotor of a wind turbine. Furthermore, the invention is related to a system for manufacturing a sub-component for a rotor blade of a rotor of a wind turbine.

Rotor blades of wind turbines are also denoted wind blades. Such rotor blades structural designs mostly comply of a plurality of sub-components, such as spar caps, at least one shear web sandwiched in between the spar caps and a plurality of blade shells, also denoted shell panels, forming a skin of the rotor blade. All these sub-components are conventionally designed in composite materials, e.g. glass fiber reinforced plastics (GFRP), carbon fiber reinforced plastics (CFRP), basalt, boron or the like, that are provided in form of dry fiber mats and/or prepregs and further processed in a molding process such as vacuum assisted resin transfer molding (VARTM) or the like.

Spar caps fulfil the function of primary load carry sub-components, especially for the ultimate and fatigue longitudinal flapwise loads. An efficient design of these sub-components consists in employing unidirectional (UD) composite layups where the fibers, that mostly provide the stiffness and strength to the composite material, are aligned in a longitudinal direction, especially in the main direction of the structural loads.

One of the main issues in UD spar caps, constructed via layup of dry fiber mats and/or prepregs, is the presence of transversal wrinkles (TW). TW are basically a deviation of fibers from the longitudinal design direction and occur usually due to manufacturing errors or dry mats defects, such as folds, dry mats straightness, plydrops or the like. Moreover, TW are intrinsically related to the nature of the raw material in form of dry fiber mats and/or prepregs. TW become more and more critical with the increase of longitudinal stiffness of the composite material, therefore, especially when employing CFRP in the design of the sub-component.

CFPR and other UD composites can be introduced in blade sparcaps in form of UD pultruded elements that have a substantial rectangular shape with thickness in the order of 3 mm to 6 mm, width of 80 mm to 300 mm and corners radii in the order of 0.5mm to 2.5mm. These elements are usually supplied in coils that are uncoiled and cut to length prior introduction in the mold for a casting process.

The pultruded elements are characterized by continuous carbon fibers aligned in the longitudinal direction. Therefore, this alignment is also denoted unidirectional alignment. Furthermore, the pultruded elements are kept together by a matrix material that can be of various nature. Common matrix materials are resins, such as vinyl ester, epoxy, polyurethane or the like. The main advantage of using a pultrusion process is the improved product quality, since pultruded elements usually do not have TW and, therefore, a laminate produced of these elements is more likely to be wrinkle-free as well. This property derives intrinsically from the pultrusion process that consists in pulling, especially in straightening the fibers through a casting die after the fibers have been impregnated.

The pultruded elements are usually provided with a layer of peel ply on each of the wider faces that has to be removed prior layup and casting of the elements into the final structure. The peel ply protects the pultruded element during transportation, storage and handling from environmental contamination and provides, after removal, that a surface preparation is required to achieve the minimum interlaminar shear and peel strengths required by the design.

However, the use of peel ply has major disadvantages. Due to manufacturing difficulties, the peel ply cannot cover the whole face of the pultruded element. Therefore, edge areas will be free of peel ply. Moreover, application of peel ply on the narrow faces of the pultruded elements is cumbersome and hardly possible.

Poor resin permeability of the pultruded elements often comprises as a consequence voids, poor resin impregnation, kissing bonds, air bubbles or the like. After the peel ply has been removed and the elements had been stacked, the edge areas that had not been covered with peel ply of a pultruded element contact the edge areas that had not been covered with peel ply of an adjacent element of the stack. These contact regions form a wall that blocks resin flow during the injection or impregnation process. This problem is emphasized in a VARTM process when the vacuum pressure is applied and all the loads from the vacuum device, e.g. a vacuum bag, is unloaded on these small edge areas. Furthermore, usage of peel ply is quite expensive and demands costly removal process. Moreover, peel ply may introduce defects, such as folds, air-bubbles or the like, into the pultruded element and can even slow down the pultrusion process. Omitted removal of peel ply, e.g. due to carelessness of a worker, may result in a catastrophic effect with respect to the cohesion of the final sub-component.

For avoiding the problem of contacting edge areas, EP 2922690 A1 suggest a design with chamfered edge areas. This has the advantage that a flow path of the resin injected between the pultruded elements arranged in a stack during a VARTM process is improved. However, such chamfered edge areas are relatively weak and barely contribute to the stability of the final sub-component, especially due to poor resin impregnation that can easily trigger cracks.

Therefore, it is an object of the present invention, to provide a method and a system for manufacturing a sub-component for a rotor blade of a wind turbine that does not have these drawbacks or at least partially does not have these drawbacks. In particular, it is the object of the present invention, to provide a method and a system for manufacturing a sub-component for a rotor blade of a rotor of a wind turbine that improve manufacturing of a rotor blade with less defects and/or at an improved production speed and/or with less resources and/or with less overall production costs.

This object is solved by the patent claims. Therefore, this object is solved by a method for manufacturing a sub-component for a rotor blade of a wind turbine with the features of independent claim 1 and by a system for manufacturing a sub-component for a rotor blade of a wind turbine with the features of independent claim 11. Further details of the invention unfold from the dependent claims as well as the description and the drawings.

According to a first aspect of the invention, the problem is solved by a method for manufacturing a sub-component for a rotor blade of a wind turbine. The method comprising the following steps:
- pultruding fiber material by pultrusion means,
- treating the surface of at least one face of the pultruded fiber material by mechanical and/or physical treatment means,
- cutting the pultruded fiber material to fiber material elements of desired lengths by cutting means, and
- stacking a plurality of the fiber material elements to form the sub-component.

Preferably, the sub-component is manufactured a spar cap for the rotor blade. It is further preferred that the pultruded fiber material has a rectangular cross-section with different edge lengths. In other words, it is preferred that the pultruded fiber material is latch shaped with two opposing wide faces and two opposing narrow faces. Preferably, the wide faces are configured as top-face and bottom-face of the pultruded fiber material, wherein the narrow faces are preferably configured as side-faces of the pultruded fiber material.

The pultrusion process is performed by pultrusion means. The pultrusion means preferably comprise a rovings magazine for providing a plurality of fiber rovings, a pultrusion die for shaping the fibers and pulling means for pulling the fibers through the pultrusion die.

The treatment process is performed by mechanical and/or physical treatment means. In addition, a chemical treatment by chemical treatment means can be considered. Preferably, the treatment process is performed as a flow process with a continuous pultruded fiber material. Within the application, pultruded fiber material comprising a length that is the multiple of the length of one fiber element is considered as continuous. The mechanical and/or physical treatment means are configured to manipulate the surface of the pultruded fiber material in order to improve lamination of a plurality of pultruded fiber elements. Therefore, the mechanical and/or physical treatment means are preferably configured to achieve a surface with a roughness that is especially apt for a laminating process of multiple fiber material elements in a stack with matrix material.

The cutting process is performed by cutting means such as a saw, especially a circular or band saw, end-cutting pliers, a cutting die or the like. In the cutting process, the endless pultruded fiber material is cut into fiber material elements with defined lengths. The cutting process can be performed before or after the treatment process. Preferably, the cutting process is performed after the treatment process.

Preferably after the cutting process, the plurality of fiber material elements is stacked to form the sub-component. The stacking process is preferably performed within a mold to enable a subsequent molding process with matrix material and preferably with induced pressure and/or heat. It is further preferred that a carbon fabric is provided between two adjacent pultruded fiber material elements in the stacking process.

The method for manufacturing a sub-component for a rotor blade of a wind turbine according to the invention has the advantage over known methods that in an easy and cost-efficient way, a wrinkle free and/or firmly bound sub-component, especially a spar cap, can be manufactured. The surface treatment process can be performed on the corner regions of the faces as well. Thus, the blocking of the matrix material can be prevented. This enables the production of better bonding between the plurality of layers of fiber elements in the stack. Furthermore, the cumbersome usage of peel ply can be abolished. This can save production costs and reduce the production of waste material. Moreover, the method enables an improved quality of the narrow faces, especially when the narrow faces have dimensions that are too small for peel ply technology. By these means, production time and production costs of the sub-component can be reduced, product quality of the sub-component can be enhanced.

It is preferred that for the at least one face to be mechanically treated, at least one wide face of the pultruded fiber material and/or at least one narrow face of the pultruded fiber material is selected. The wide faces of the pultruded fiber material are preferably used for bonding adjacent fiber material elements in the stack together. Therefore, performing the treatment process on the surface of the wide faces can increase the surface quality of the sub-component, increase the bonding of the fiber material elements within the stack and can make the usage of peel ply needless. Performing the treatment process on the surface of the narrow faces has the advantage that the particular surfaces can be improved, especially when the narrow faces are too narrow for application of peel ply.

Advantageously, before and/or during the pultrusion process, the fiber material is impregnated with a matrix material by impregnation means. This means for example that the fiber material can be provided for the treatment process as prepreg. In the pultrusion process, the fibers can be impregnated with resin or the like e.g. before or during being pulled through the forming die of the pultrusion means. This has the advantage that a bonding of the fibers of the pultruded fiber material is improved and air bubbles within the pultruded fiber material can be avoided.

According to a preferred embodiment of the invention, before the treatment process, the pultruded fiber material is cured to harden the matrix material, especially by heat and/or pressure and/or chemical treatment. The curing is preferably performed in a way that bending of the pultruded fiber material is still possible without breaking the material or producing sharp bends. Curing the impregnated fiber material has the advantage that unwanted sticking together of adjacent fiber strings and leaking of matrix material from the impregnated fibers thus can be avoided. This has the further advantage that a bonding of the fibers of the pultruded fiber material is improved.

Preferably, for mechanical and/or physical treatment means, a brush for surface grinding and/or a sandblasting device and/or a corona treatment device is used. Preferably, the brush is configured as a rotating device. Further preferred, the brush is configured for mechanically treatment of the narrow face or the narrow faces of the pultruded fiber material. Preferably, a series of brushes with different properties is used, wherein the brushes that contact the pultruded fiber material at first preferably have a rougher property than the subsequent brushes. The sandblasting device can be configured as a conventional sandblasting device with a pressure generator, a tank for sand and a jet for targeted praying the sand onto the surface of the pultruded fiber material. The corona device is configured for physical treatment of the surface of the pultruded fiber material with means of an electric beam or a plurality of electric beams. Preferably, the corona device is configured for physical treatment of the wide face or the wide faces of the pultruded fiber material. With such mechanical and/or physical treatment, surface properties can be achieved that are advantageous for bonding the stack with matrix material.

It is preferred that the pultruded fiber material is wound up as a coil of pultruded fiber material by winding means after being pultruded by the pultrusion means. The winding means preferably comprise a winding drum for holding the fiber material in shape and a motor for rotating the winding drum. Preferably, the fiber material is impregnated before being coiled. Further preferred, the impregnated fiber material is cured before being coiled. Coiling has the advantage that transport and further handling of the fiber material is improved. Surface defects, such as scratches or the like, that are introduced into the fiber material due to the coiling process, can be easily repaired in the subsequent treatment process.

Advantageously, the pultruded fiber material is uncoiled from the coil before or during the treatment process by uncoiling means. The uncoiling means preferably comprise holding means for pivotably holding the winding drum with the coiled fiber material and forwarding means for forwarding the fiber material to the mechanical and/or physical treatment means and thereby uncoiling the fiber material. This has the advantage that surface defects, such as scratches or the like, that are introduced into the fiber material due to the coiling process, can be easily repaired in the subsequent treatment process. Moreover, contamination from external agents can be removed by the treatment process.

In a preferred embodiment of the invention, the pultruded fiber material is handled peel ply free during the process. This means that preferably no peel ply is used to protect the surface of the pultruded fiber material. Peel ply can be avoided because in the treatment process, the surface of the fiber material can be easily finalized for stacking to form the sub-component with none or at least less defects. Thus, extra process steps of application and removal of peel ply can be avoided. Another advantage of avoiding peel ply is that the fatal consequences of forgotten removal of peel ply cannot are not imminent anymore. By these means, product costs and quality can be easily improved.

It is preferred that the formed sub-component is impregnated in a vacuum assisted resin transfer molding process by molding means, especially right after the surface treatment process. Due to the machined surface of the stacked fiber material elements, matrix material, such as resin or the like, can easily infiltrate the stack to achieve an equal distribution of matrix material within the stack. The distribution of matrix material is further improved by the vacuum. Preferably, the stack is cured afterwards, e. g. by heat, by pressure, chemically or the like, in order to harden the matrix material and to achieve a smooth surface of the sub-component.

Preferably, for fiber material, carbon fibers and/or glass fibers and/or aramid fibers are used. Such fiber materials are advantageously for pultrusion processes and can provide sufficient stiffness for the sub-component. Moreover, these fiber materials are easy to handle and have a high availability.

According to a second aspect of the invention, the problem is solved by a system for manufacturing a sub-component for a rotor blade of a wind turbine. The system comprising pultrusion means for pultruding fiber material and cutting means for cutting pultruded fiber material to desired lengths. According to the invention, the system further comprises mechanical and/or physical treatment means for mechanically treating a surface of at least one face of the pultruded fiber material.

The pultrusion means are configured for pultruding the fiber material and, preferably, comprise a rovings magazine for providing a plurality of fiber rovings, a pultrusion die for shaping the fibers and pulling means for pulling the fibers through the pultrusion die.

The cutting means are configured for cutting the pultruded fiber material to desired lengths and, preferably, the cutting means comprise a saw, especially a circular or band saw, end-cutting pliers, a cutting die or the like.

The mechanical and/or physical treatment means are configured for performing the treatment process of the surface of at least one face of the pultruded fiber material. Preferably, the treatment process is a manipulation of the surface of the pultruded fiber material in order to improve lamination of a plurality of pultruded fiber elements. Therefore, the mechanical and/or physical treatment means are preferably configured to achieve a surface with a roughness that is especially apt for a laminating or bonding process of multiple fiber material elements in a stack with matrix material. The mechanical and/or physical treatment means preferably comprise a brush for surface grinding and/or a sandblasting device and/or a corona treatment device. Further preferred, the brush is configured for mechanically treatment of the narrow face or the narrow faces of the pultruded fiber material. Preferably, the mechanical and/or physical treatment means comprise a series of brushes with different properties, wherein the brushes that are configured to contact the pultruded fiber material at first preferably have a rougher property than the subsequent brushes. Preferably, the sandblasting device is configured as a conventional sandblasting device with a pressure generator, a tank for sand and a jet for targeted praying the sand onto the surface of the pultruded fiber material. Preferably, the corona device is configured for physical treatment of the surface of the pultruded fiber material with means of an electric beam or a plurality of electric beams. Preferably, the corona device is configured for physical treatment of the wide face or the wide faces of the pultruded fiber material. With such treatment, surface properties can be achieved that are advantageous for bonding the stack with matrix material.

The system for manufacturing a sub-component for a rotor blade of a wind turbine according to the invention has the same advantages than the method for manufacturing a sub-component for a rotor blade of a wind turbine according to the first aspect of the invention. Therefore, the system has the advantage that in an easy and cost-efficient way, a wrinkle free and/or firmly bound sub-component, especially a spar cap, can be manufactured. The surface treatment can be performed on the corner regions of the faces as well. Thus, the blocking of the matrix material can be prevented. This enables the production of better bonding between the plurality of layers of fiber elements in the stack. Furthermore, the cumbersome usage of peel ply can be abolished. This can save production costs and reduce the production of waste material. Moreover, the system enables an improved quality of the narrow faces, especially when the narrow faces have dimensions that are too small for peel ply technology. By these means, production time and production costs of the sub-component can be reduced, product quality of the sub-component can be enhanced.

Preferably, the system is configured for executing the method according to the first aspect of the invention.

Further advantages, features and details of the invention unfold from the following description, in which by reference to drawings working examples of the present invention are described in detail. Thereby, the features from the claims as well as the features mentioned in the description can be essential for the invention as taken alone or in an arbitrary combination. In the drawings:
- Figure 1: shows a schematic sectional side view of a prior art rotor blade of a wind turbine,
- Figure 2: shows a magnified cutout view of the rotor blade of figure 1,
- Figure 3: shows a schematic side view of a first part of a preferred embodiment of a system according to the invention,
- Figure 4: shows a schematic side view of a second part of a preferred embodiment of a system according to the invention, and
- Figure 5: shows a schematic flow plan of a preferred embodiment of the method according to the invention.

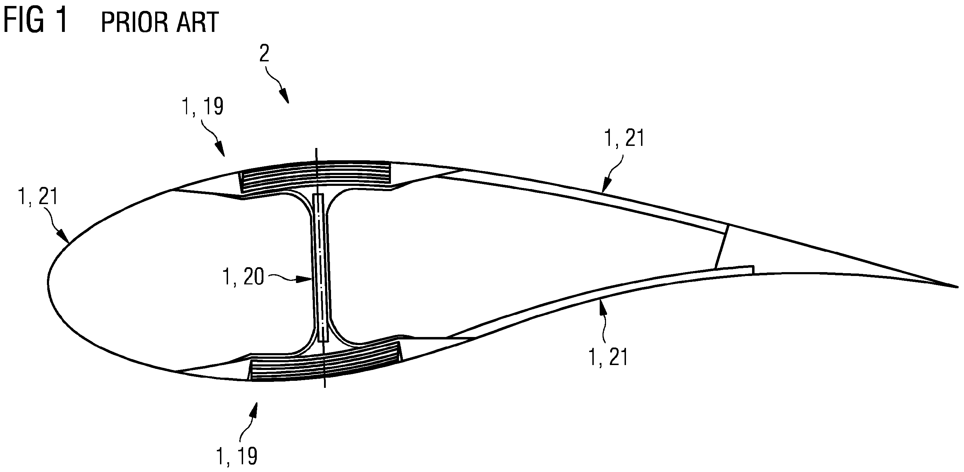

Elements with the same function and effectiveness are denoted each in figures 1 to 5 with the same reference numbers.

In Fig. 1, a prior art rotor blade 2 of a wind turbine is shown in a schematic sectional side view. The rotor blade 2 comprises a plurality of sub-components 1, such as spar caps 19, a web 20 and shell panels 21.

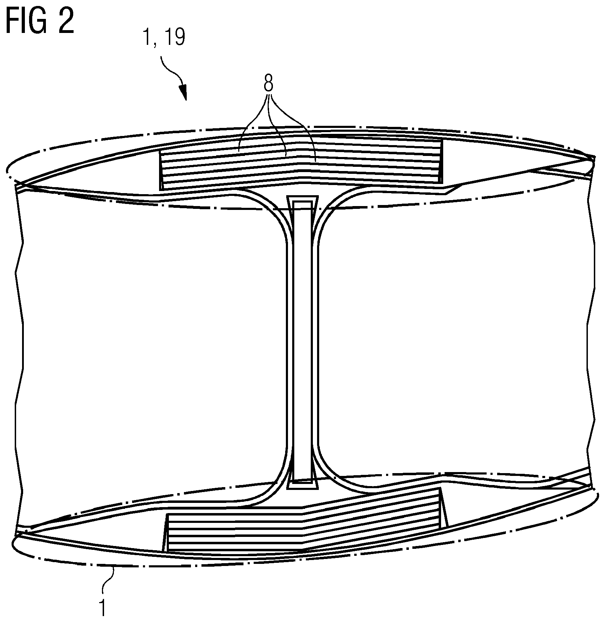

Fig. 2 shows a magnified cutout view of the rotor blade 2 of fig. 1. In this view, the stacked and laminated fiber material elements 8 of the spar caps 19 are visible.

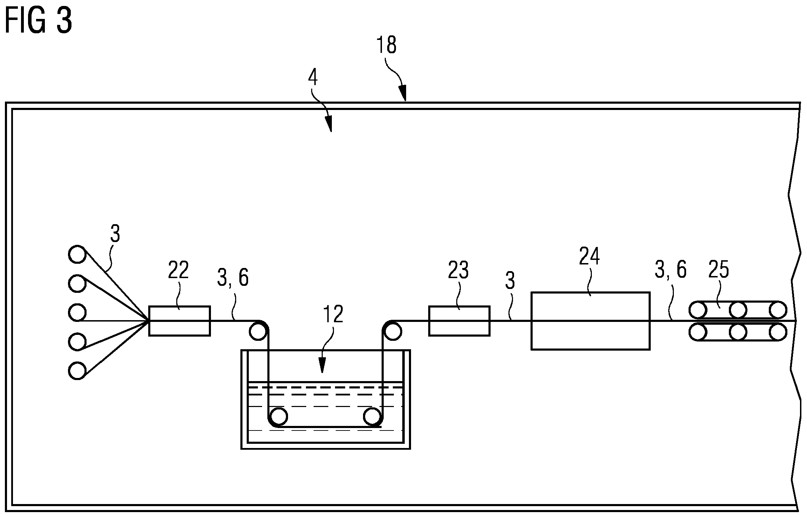

In Fig. 3, a first part of a preferred embodiment of a system 18 according to the invention is shown in a schematic side view. The system 18 comprises pultrusion means 4 with a guiding plate 22 for guiding the fiber material 3, impregnation means 12, e.g. a resin bath, for impregnating the fiber material 3 with matrix material, optional preforming means 23 for preforming the fiber material 3, a pultrusion die 24 for final forming the fiber material 3 and pulling means 25 for pulling the fiber material 3. In this example, the pultrusion die 24 is configured for curing the matrix material as well. Means for coiling the pultruded fiber material 6 are not shown.

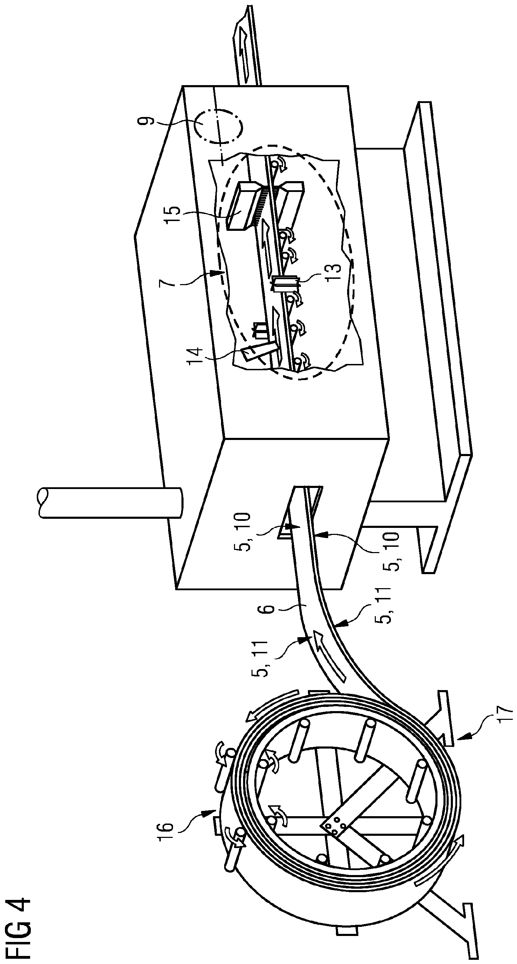

In Fig. 4, a second part of a preferred embodiment of a system 18 according to the invention is shown in a schematic side view. The system 18 further comprises uncoiling means 17 for uncoiling a coil 16 of pultruded fiber material 6. The pultruded fiber material 6 has a surface 5 with two opposing wide faces 10 and two opposing narrow faces 11. The system 18 further comprising mechanical and/or physical treatment means 7 with an optional sandblasting device 14, a brush 13 and a corona treatment device 15. In this preferred embodiment, the sandblasting device 14 is configured for mechanical treatment of the surface 5 of a wide face 10 of the pultruded fiber material 6. The brush 13 is configured for mechanical treatment of the surfaces 5 of both narrow faces 11 of the pultruded fiber material 6. The corona treatment device 15 is configured for physical treatment of the surfaces 5 of both wide faces 10 of the pultruded fiber material 6. Moreover, the system 18 comprises cutting means 9 for cutting the pultruded fiber material 6 into fiber material elements 8 after the treatment process.

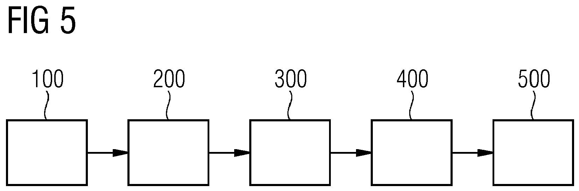

Fig. 5 shows a schematic flow plan of a preferred embodiment of the method according to the invention. In a first step 100, fiber material 3 is pultruded by pultrusion means 4. The pultruded fiber material 6 is preferably coiled. In a second step 200, the surface 5 of at least the wide face 10 and/or the narrow face 11 of the pultruded fiber material 6 is mechanically treated by mechanical and/or physical treatment means 7, especially by a brush 13 and/or a sandblasting device 14 and/or a corona treatment device 15. In case the pultruded fiber material 6 is provided as a coil 16, the pultruded fiber material 6 is preferably uncoiled before the treatment process by uncoiling means 17. The treatment process is performed in a way that a subsequent VARTM process of stacked fiber material elements 8 is improved. This means, that barriers that block flow of the matrix material at outer areas of the stacked fiber material elements 8 are eliminated or at least reduced and/or that a roughness of the surface 5 of the fiber material elements 8 is optimized for bonding in the VARTM process and/or that defects of the surface 5 of the fiber material elements 8 are eliminated or at least reduced. In a third step 300, the pultruded fiber material 6 is cut to fiber material elements 8 of desired lengths by cutting means 9. In a fourth step 400, a plurality of the fiber material elements 8 are stacked to form the sub-component 1. In a fifth step 500, the formed sub-component 1 is processed in a VARTM process to obtain the final sub-component 1.

## Claims

1. Method for manufacturing a sub-component (1) for a rotor blade (2) of a wind turbine, comprising the following steps:
- pultruding fiber material (3) by pultrusion means (4),
- treating the surface (5) of at least one face (10, 11) of the pultruded fiber material (6) by mechanical and/or physical treatment means (7),
- cutting the pultruded fiber material (6) to fiber material elements (8) of desired lengths by cutting means (9), and
- stacking a plurality of the fiber material elements (8) to form the sub-component (1).

2. Method according to claim 1,
**characterized in**
**that** for the at least one face to be mechanically treated, at least one wide face (10) of the pultruded fiber material (6) and/or at least one narrow face (11) of the pultruded fiber material (6) is selected.

3. Method according to claim 1 or 2,
**characterized in**
**that** before the pultrusion process, the fiber material (3) is impregnated with a matrix material by impregnation means (12) .

4. Method according to claim 3,
**characterized in**
**that** before the treatment process, the pultruded fiber material (6) is cured to harden the matrix material, especially by heat and/or pressure and/or chemical treatment.

5. Method according to any of the previous claims,
**characterized in**
**that** for mechanical and/or physical treatment means (7), a brush (13) for surface grinding and/or a sandblasting device (14) and/or a corona treatment device (15) is used.

6. Method according to any of the previous claims,
**characterized in**
**that** the pultruded fiber material (6) is wound up as a coil (16) of pultruded fiber material (6) by winding means after being pultruded by the pultrusion means (4).

7. Method according to claim 6,
**characterized in**
**that** the pultruded fiber material (6) is uncoiled from the coil before or during the treatment process by uncoiling means (17).

8. Method according to any of the previous claims,
**characterized in**
**that** the pultruded fiber material (6) is handled peel ply free during the process.

9. Method according to any of the previous claims,
**characterized in**
**that** the formed sub-component (1) is impregnated in a vacuum assisted resin transfer molding process by molding means.

10. Method according to any of the previous claims,
**characterized in**
**that** for fiber material (3), carbon fibers and/or glass fibers and/or aramid fibers are used.

11. System (18) for manufacturing a sub-component (1) for a rotor blade (2) of a wind turbine, comprising pultrusion means (4) for pultruding fiber material (3) and cutting means (9) for cutting pultruded fiber material (6) to desired lengths,
**characterized in**
**that** the system (18) further comprises mechanical and/or physical treatment means (7) for mechanically treating a surface (5) of at least one face (10, 11) of the pultruded fiber material (6).

12. System (18) according to claim 11,
**characterized in**
**that** the system (18) is configured for executing a method according to any of claims 1 to 10.
